Europäisches Patentamt

European Patent Office

Office européen des brevets

(19)

(11) Veröffentlichungsnummer: **0 279 220**
**A2**

# (12) EUROPÄISCHE PATENTANMELDUNG

(21) Anmeldenummer: 88101009.4

(22) Anmeldetag: 25.01.88

(51) Int. Cl.⁴ **F04D 13/02**

(30) Priorität: 14.02.87 DE 3704671

(43) Veröffentlichungstag der Anmeldung:
24.08.88 Patentblatt 88/34

(84) Benannte Vertragsstaaten:
**AT BE CH ES FR GB IT LI NL SE**

(71) Anmelder: **Richter Chemie-Technik GmbH**
**Industriestrasse 2 Postfach 609**
**D-4152 Kempen 1/Ndrh.(DE)**

(72) Erfinder: **Hatting, Paul**
**Tümpweg 15**
**D-4152 Kempen(DE)**
Erfinder: **Wienen, Kurt**
**Schillerstrasse 15**
**D-4172 Straelen(DE)**

(74) Vertreter: **Schmitz, Waldemar, Dipl.-Phys.**
**Lessingstrasse 10**
**D-6200 Wiesbaden(DE)**

(54) **Leckanzeigevorrichtung für eine Magnetkreiselpumpe.**

(57) Eine Leckanzeigevorrichtung für eine Magnetkreiselpumpe mit einem gegen das gepumpte Medium dichtenden Spalttopf, der aus zwei ineinander
gesteckten Spalttöpfen mit Kragen besteht, enthält
einen Ring, der zwischen den Kragen der beiden
Spalttöpfe eingeklemmt ist, wobei der Ring eine
radiale Bohrung aufweist, die einerseits mit dem
Raum zwischen den Spalttöpfen und andererseits
mit einem Anzeigegerät in Verbindung steht.

EP 0 279 220 A2

## Leckanzeigevorrichtung für eine Magnetkreiselpumpe

Die Erfindung betrifft eine Leckanzeigevorrichtung für eine Magnetkreiselpumpe mit einem gegen das gepumpte Medium dichtenden Spalttopf, der aus zwei ineinander gesteckten Spalttöpfen mit Kragen besteht.

Es ist lediglich aus der DE-PS 1 800 018 eine hydraulische Membranpumpe bekannt, die eine den Förderraum und den Hydraulikraum trennende Membrane aufweist, welche aus drei aneinanderliegenden Einzelmembranen besteht. Die mittlere Membrane weist Schlitze auf, die mit Hydraulikflüssigkeit gefüllt sind. Wird eine Membrane beschädigt, gelangt Förder-oder Hydraulikmedium in diese Schlitze und drückt die darin befindliche Flüssigkeit in einen außerhalb der Pumpe befindlichen Behälter, wo diese eine Signaleinrichtung auslöst.

Diese nur für Membranpumpen entwickelte und geeignete Leckanzeigevorrichtung hat den Nachteil, daß der Raum zwischen den äußeren Membranen immer mit Flüssigkeit gefüllt sein muß, die unter einem bestimmten Druck stehen muß, damit die Membrane einwandfrei hydraulisch gekoppelt wird. Dies erfordert einen nicht unerheblichen technischen Aufwand.

Bekannte Magnetkreiselpumpen weisen zwei ineinandergesteckte Spalttöpfe auf, wobei der innere Spalttopf aus einem chemisch beständigen Kunststoff und der äußere aus einem Faserverbundwerkstoff besteht.

Wird nun der innere Topf durch Erosion oder Feststoffe im zu pumpenden Medium beschädigt, so wird der Schaden erst offenkundig, wenn auch der äußere Topf und die Gußpanzerung durch die hochagressiven, toxischen oder ätzenden Medien zerstört worden ist und das Medium unter dem Druck der laufenden Pumpe in die Umwelt befördert wird.

Ziel der Erfindung ist es daher, eine einfache Vorrichtung zu schaffen, mit der Beschädigungen des inneren Spalttopfes rechtzeitig erkannt und gemeldet werden.

Dieses Ziel wird durch eine Leckanzeigevorrichtung gemäß den Merkmalen von Anspruch 1 gelöst.

Durch die Anordnung der Vorrichtung zwischen den beiden Spalttöpfen wird der Zwischenraum überwacht, so daß bei einem Leck am inneren Spalttopf das austretende Medium sofort durch die Bohrung im Ring abfließen und dadurch eine Anzeigevorrichtung betätigen kann.

Die Anzeigevorrichtung selbst kann auch als Druck-oder Vakuumüberwachungsvorrichtung (z.B. Manometer) oder als elektronische Feuchtigkeits-oder Widerstandsüberwachungsvorrichtung ausgebildet sein, die zusätzlich noch an eine akustische (z.B. Hupe) oder optische Signaleinrichtung (z.B. aufleuchtende Lampe) angeschlossen werden kann. In diesem Fall wird eine plötzliche Druckänderung im Raum zwischen den Spalttöpfen sofort erkannt und gemeldet.

Da das Leck an jeder beliebigen Stelle des Spalttopfes auftreten kann, wird der Zwischenraum vorteilhafterweise durch eine an der Außenfläche des inneren Spalttopfes eingebrachte Nut gebildet, die sich gewindeartig über die gesamte Außenfläche des Spalttopfes erstreckt und mit dieser Ringnut und damit auch mit der Bohrung in Verbindung steht.

Gemäß einer anderen Ausführungsform ist der Zwischenraum mit einer netzartigen Gewebe-oder Kunststoffmatte ausgefüllt, um bei einem Schaden am inneren Topf den Transport des Mediums durch den Pumpendruck bis zur umlaufenden Nut im Ring zu ermöglichen.

Beispielhafte Ausführungsformen werden nachfolgend anhand der Zeichnung näher erläutert.

Es zeigen:

Fig. 1 einen Teillängsschnitt durch eine Magnetpumpe mit einer Leckanzeigevorrichtung gemäß einer Ausführungsform.

Fig. 2 einen Teillängsschnitt durch eine Magnetpumpe mit einer Leckanzeigevorrichtung gemäß einer anderen Ausführungsform.

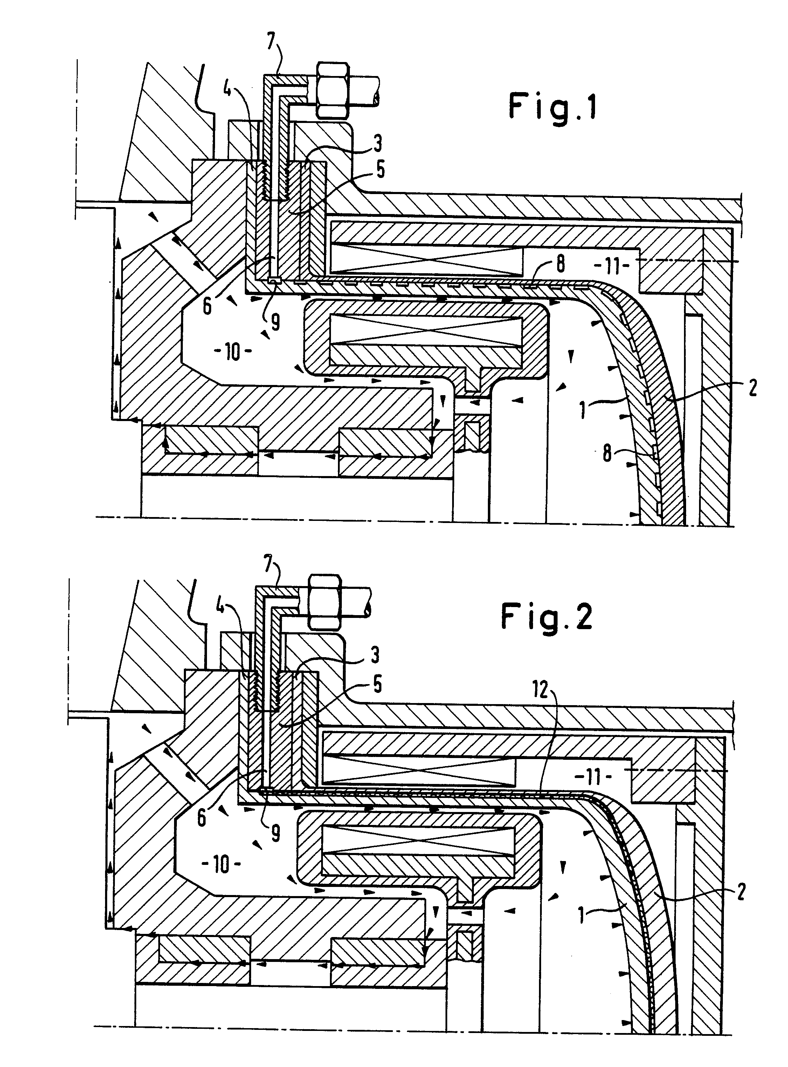

Fig. 1 zeigt einen Längsschnitt durch die Pumpe. Die Pumpe wird durch die Spalttöpfe 1, 2 in den Produktraum 10 und den Antriebsraum 11 unterteilt.

Zwischen dem Kragen 3 des äußeren Spalttopfes 2 und dem Kragen 4 des inneren Spalttopfes 1 ist ein Ring 5 eingeklemmt, der eine radiale Bohrung 6 aufweist. Diese Bohrung 6 ist über ein Rohrstück 7 mit einer nicht dargestellten außerhalb der Pumpe angeordneten Anzeigevorrichtung verbunden.

Das andere Ende der Bohrung 6 mündet in die umlaufende Nut 9, die in der gezeigten Ausführungsform einer entsprechenden Nut im Spalttopf 1 gegenüberliegt.

Eine Ausführung des Zwischenraums ist eine gewindeartig umlaufende Nut 8, außen auf den inneren Topf 1 eingearbeitet. Diese endet in der umlaufenden Nut 9. Es können auch zusätzliche Längsnuten (nicht dargestellt) vorgesehen sein, die die Gewindenut um 90° schneiden und einen schnelleren Transport zur Nut 9 ermöglichen.

Die Pfeile deuten die Strömungsrichtung des zu pumpenden Mediums an.

In Figur 2 ist ein Zwischenraum zwischen den Töpfen gezeichnet, der mit einer druckfesten, netzartigen Gewebe-oder Kunststoffmatte 12 ausgefüllt ist, um bei einem Schaden am inneren Topf den Transport des Mediums durch den Pumpendruck bis zur umlaufenden Nute 9 im Ring 6 zu ermöglichen.

**Ansprüche**

1. Leckanzeigevorrichtung für eine Magnetkreiselpumpe mit einem gegen das gepumpte Medium dichtenden Spalttopf, der aus zwei ineinander gesteckten Spalttöpfen mit Kragen besteht, gekennzeichnet durch einen Ring (5), der zwischen den Kragen (3, 4) der beiden Spalttöpfe (1, 2) eingeklemmt ist, wobei dieser Ring (5) eine radiale Bohrung (6) aufweist, die einerseits mit dem Raum zwischen den Spalttöpfen und andererseits mit einem Anzeigegerät in Verbindung steht.

2. Leckanzeigevorrichtung nach Anspruch 1, dadurch gekennzeichnet, daß diese Bohrung (6) über eine an der Innenseite des Rings (5) umlaufende Nut (9) mit dem Raum zwischen den Spalttöpfen (1, 2) verbunden ist.

3. Leckanzeigevorrichtung nach Anspruch 1 oder 2, dadurch gekennzeichnet, daß dieser Raum zwischen den Spalttöpfen (1, 2) durch eine an der Außenfläche des inneren Spalttopfes (1) eingebrachte Nut (8) gebildet wird, die sich gewindeartig über die gesamte Außenfläche des Spalttopfes (1) erstreckt und die in diese Nut (9) mündet.

4. Leckanzeigevorrichtung nach einem der Ansprüche 1 oder 2, dadurch gekennzeichnet, daß dieser Raum zwischen den Spalttöpfen bis in den Bereich der Nut (9) mit einer Gewebe-oder Kunststoffmatte ausgefüllt ist.

5. Leckanzeigevorrichtung nach einem der Ansprüche 1 bis 4, dadurch gekennzeichnet, daß dieses Anzeigegerät als Druck-oder Vakuumüberwachungsvorrichtung ausgebildet ist.

6. Leckanzeigevorrichtung nach einem der Ansprüche 1 bis 4, dadurch gekennzeichnet, daß dieses Anzeigegerät als elektronische Feuchtigkeits-oder Widerstandsmeßvorrichtung ausgebildet ist.

0 279 220

# Fig.1

# Fig.2